# FASCICULE DE BREVET EUROPEEN

(11) **EP 1 475 025 B1**
(45) Date de publication et mention de la délivrance du brevet: **27.07.2005**
(21) Numéro de dépôt: 04290727.9
(22) Date de dépôt: 17.03.2004
(51) Int. Cl.: A47J 43/07, A47J 43/08

(54) **Outil de machine de traitement de produits alimentaires, notamment de type mixeur, et machine équipée d'un tel outil**
Werkzeug einer Maschine zur Behandlung eines Nahrungsmittels, insbesondere ein Mixer, und damit ausgerüstete Maschine
Tool of a machine for the treatment of food products, in particular a mixer, and machine equipped with such a tool

(30) Priorité: 09.05.2003 FR 0305635
(43) Date de publication de la demande: 10.11.2004
(73) Titulaire: Dito Sama, 23200 Aubusson (FR)
(72) Inventeur: Naud, Georges, 23200 Aubusson (FR); Lagier, Christophe, 23200 Aubusson (FR); Paturel, Bruno, 23200 Aubusson (FR)
(74) Mandataire: Hadjadj, Laurent

(56) Documents cités:
- WO-A-01/84996
- WO-A-03/003889
- FR-A- 2 780 264
- US-A- 3 299 924
- US-A- 5 368 384
- US-B1- 6 193 404

## Description

La présente invention concerne un outil de machine de traitement de produits alimentaires, comportant
- un tube-enveloppe,
- un arbre d'entraînement en rotation d'un organe de traitement des produits, et
- un organe de centrage et de guidage assurant le montage à rotation de l'arbre d'entraînement dans le tube-enveloppe,
- le tube-enveloppe et l'arbre d'entraînement étant munis à une même première extrémité respectivement de moyens de verrouillage démontables sur un corps de machine et de moyens d'accouplement débrayables à un arbre-moteur de la machine,
- l'organe de centrage et de guidage comportant des moyens démontables de fixation au tube-enveloppe, de façon à permettre le démontage de l'arbre d'entraînement par rapport au tube-enveloppe.

Un tel outil a par exemple été décrit dans la demande de brevet français au nom de la Demanderesse, publiée sous le n° 2 780 264.

L'outil décrit dans cette demande antérieure comporte un palier de roulement démontable fixé dans le tube-enveloppe du côté de l'extrémité d'arbre d'entraînement sur laquelle est monté l'organe de traitement des produits, c'est-à-dire du côté opposé à l'extrémité d'accouplement à l'arbre-moteur.

On a constaté que, selon le type de moyens de verrouillage démontables prévus sur ce palier, il pouvait se produire au cours du fonctionnement de l'outil, un démontage intempestif du palier et donc de l'arbre d'entraînement.

Un tel démontage intempestif peut découler d'un montage préalable incomplet du palier dans le tube enveloppe et/ou d'une trop faible rétention des moyens de verrouillage du palier vis-à-vis des contraintes mécaniques exercées sur ce dernier (poids de l'arbre d'entraînement, forces centrifuges, phénomènes vibratoires, etc...).

L'invention a principalement pour but d'éviter un démontage non souhaité des moyens de centrage et de guidage, notamment au cours du fonctionnement de l'outil, et de procurer un niveau de sécurité optimal de la machine lorsqu'elle est munie d'un tel outil.

A cet effet, dans un outil conforme à l'invention, l'organe de centrage et de guidage est monté dans le tube-enveloppe du côté de la première extrémité, et ces moyens de fixation sont adaptés pour être bloqués en position correcte de fixation sur le tube-enveloppe par des moyens complémentaires de blocage prévus sur le corps de machine, lors de la fixation du tube-enveloppe sur le corps de machine, de façon à éviter le démontage intempestif de l'arbre d'entraînement par rapport au tube-enveloppe lors du fonctionnement de l'outil.

Suivant d'autres caractéristiques de l'invention :
- les moyens de fixation dudit organe de centrage et de guidage sont adaptés pour empêcher la fixation du tube-enveloppe sur le corps de machine, dans le cas où lesdits moyens de fixation sont en position incorrecte de fixation sur le tube-enveloppe ;
- les moyens de fixation dudit organe de centrage et de guidage sont adaptés pour empêcher l'accouplement de l'arbre d'entraînement et de l'arbre-moteur, dans le cas où lesdits moyens de fixation sont en position incorrecte de fixation sur le tube-enveloppe ;
- l'organe de centrage et de guidage comprend une bague et un palier de roulement, agencé dans ladite bague et recevant l'arbre d'entraînement à rotation, et le tube-enveloppe est pourvu d'un épaulement radial formant butée axiale, tandis que les moyens de fixation comprennent au moins une patte élastique en saillie axiale de la bague, ladite patte élastique présentant une extrémité libre tournée du côté de la première extrémité, ladite patte élastique étant munie d'un crochet complémentaire de l'épaulement radial, et étant susceptible de débattement radial entre une position de repos dans laquelle le crochet peut coopérer avec l'épaulement du tube-enveloppe pour définir la position correcte de fixation de l'organe de centrage et de guidage dans le tube-enveloppe, et une position fléchie vers l'intérieur ; et
- les moyens de verrouillage du tube-enveloppe sur le corps de machine comprennent, du côté de la première extrémité, au moins un bras élastique axial flexible, muni d'un crochet pouvant coopérer avec un épaulement complémentaire du corps de machine, de façon à former une liaison par encliquetage.

L'invention vise également une machine de traitement de produits alimentaires comprenant un outil tel que décrit précédemment, un corps de machine sur lequel est fixé l'outil de façon démontable, et des moyens complémentaires de blocage des moyens de fixation de l'arbre d'entraînement sur le tube enveloppe, lesdits moyens de blocage étant prévus sur ledit corps de machine.

Suivant d'autres caractéristiques de la machine selon l'invention :
- lesdits moyens complémentaires de blocage sont adaptés pour coopérer avec les moyens de fixation de l'organe de centrage et de guidage, pour empêcher la fixation du tube-enveloppe sur le corps de machine si lesdits moyens de fixation sont en position incorrecte de fixation sur le tube-enveloppe ;
- lesdits moyens complémentaires de blocage sont adaptés pour coopérer avec les moyens de fixation de l'organe de centrage et de guidage pour empêcher l'accouplement de l'arbre d'entraînement et de l'arbre-moteur, dans le cas où les moyens de fixation sont en position incorrecte de fixation sur le tube-enveloppe ;
- les moyens de blocage comprennent une paroi rigide solidaire du corps de machine, s'étendant axialement du côté de l'extrémité d'accouplement de l'arbre-moteur avec l'arbre d'entraînement de l'outil, ladite paroi étant adaptée pour bloquer le débattement de la patte élastique, en position d'assemblage complet correspondant à la position de fixation correcte de la bague dans le tube-enveloppe et à la position de verrouillage du tube-enveloppe sur le corps de machine ;
- ladite paroi rigide a une surface externe qui vient sensiblement au contact de la surface interne de la patte élastique, dans la position d'assemblage complet ;
- la paroi rigide est une paroi cylindrique coaxiale à l'arbre-moteur, de diamètre extérieur sensiblement égal, en étant inférieur, à la distance de la surface interne de la patte élastique à l'axe de l'arbre d'entraînement ; et
- l'arbre-moteur est muni d'une forme d'entraînement telle que l'extrémité d'arbre d'entraînement de l'outil et ladite forme d'entraînement coopèrent, en position d'assemblage complet, sur une longueur axiale d'entraînement, et en position d'assemblage complet, la paroi rigide recouvre la patte élastique sur une longueur axiale d'interférence, telle que la longueur d'interférence est supérieure à la longueur d'entraînement.

Un mode particulier de réalisation de l'invention va maintenant être décrit plus en détail en référence aux dessins annexés, sur lesquels :
- la Figure 1 est une vue partielle en coupe d'une machine conforme à l'invention, dans un plan longitudinal axial, l'outil étant en position d'assemblage complet sur le corps de machine ;
- la Figure 2 est une vue analogue, dans le plan référé par la ligne 2-2 sur la Figure 1 ;
- la Figure 3 est une vue en perspective de l'embout de fixation de l'outil sur le corps de machine ;
- la Figure 4 est une vue en perspective des moyens de blocage de l'organe de centrage et de guidage ;
- la Figure 5 est une vue partielle en perspective de l'organe de centrage et de guidage ; et
- la Figure 6 est une vue analogue à la Figure 1, en position de fixation incomplète de l'organe de centrage et de guidage dans le tube-enveloppe, et en position démontée du tube-enveloppe par rapport au corps de machine.

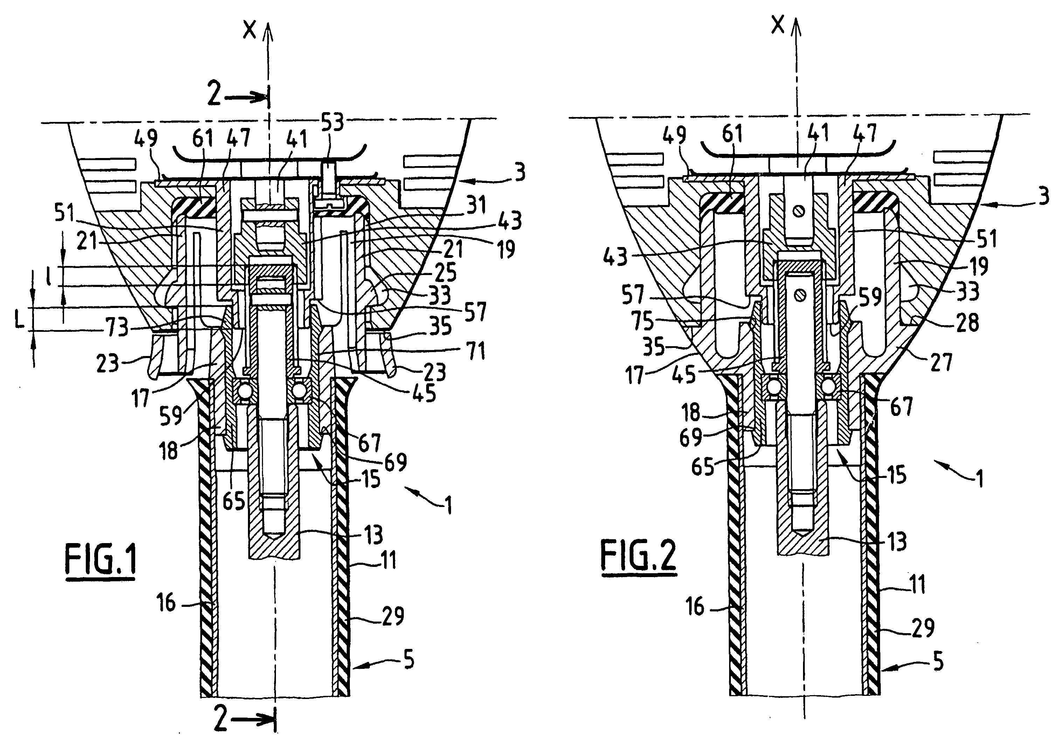

Sur les Figures 1 et 2, on a représenté une machine 1 conforme à l'invention, du type communément appelé « mixeur », cette machine comprenant un corps 3 dans lequel est agencé un moteur électrique (non représenté), et un outil 5 de traitement de produits alimentaires.

L'outil 5 comporte un organe de traitement de produits, tel qu'une lame ou couteau pouvant être entraînée en rotation par le moteur de la machine, suivant un axe de rotation X qui définit l'axe de machine 1.

La machine représentée sur les Figures pour illustrer l'invention est généralement utilisée avec son axe X maintenu verticalement, l'outil 5 plongeant dans un récipient contenant les produits alimentaires à traiter. C'est pourquoi, pour la commodité de la description qui va suivre, l'axe X de la machine 1 sera supposé vertical, orienté de bas en haut par rapport à la position d'utilisation normale de la machine.

L'outil 5 comprend essentiellement un tube-enveloppe 11 de forme générale essentiellement cylindrique, et un arbre 13 d'entraînement en rotation de l'organe de traitement des aliments. L'organe de traitement fixé à l'arbre d'entraînement 13 dans une partie d'extrémité inférieure de ce dernier, n'a pas été représenté. Il est généralement protégé par une cloche appartenant à l'outil, solidaire du tube-enveloppe, cette cloche n'étant également pas représentée.

L'arbre d'entraînement 13 est monté rotatif de façon coaxiale et démontable à l'intérieur du tube-enveloppe 11. Pour cela, l'outil 5 est muni de moyens de centrage et de guidage de l'arbre d'entraînement 13 à l'intérieur du tube 11.

Ces moyens de centrage et de guidage comprennent en particulier un palier de roulement 15 monté sur l'arbre d'entraînement 13 dans une région d'extrémité supérieure de ce dernier. Le palier 15, comme cela sera vu ultérieurement, est pourvu de moyens de fixation démontables à l'intérieur du tube 11, coopérant avec des moyens complémentaires prévus du côté de l'extrémité supérieure du tube 11. Le palier 15 assure, au niveau des extrémités supérieures respectives du tube 11 et de l'arbre 13, une liaison pivot avec arrêt axial de l'arbre 13 sur le tube 11, cette liaison étant détachable.

Les moyens de centrage et de guidage peuvent également comprendre un deuxième palier de roulement (non représenté) solidaire de l'arbre 13 dans une région d'extrémité inférieure, ledit palier pouvant venir en arrêt axial sur un épaulement interne du tube 11.

Le tube-enveloppe 11 comprend un tube principal 16 réalisé de préférence en métal, qui s'étend sur l'essentiel de la longueur du tube-enveloppe, et un embout 17 fixé de façon indémontable à l'extrémité supérieure du tube principal 16, qui assure la fixation démontable du tube-enveloppe 11 sur le corps de machine 3.

On pourra à présent se référer aux Figures 1 à 3 pour la description détaillée de l'embout 17.

Cet embout 17, réalisé de préférence en matière plastique, est essentiellement constitué d'un premier tronçon cylindrique 18 et d'un deuxième tronçon cylindrique 19 de plus grand diamètre. L'embout 17 est emmanché coaxialement sur le tube principal 16 par emboîtement du premier tronçon cylindrique 18, dont le diamètre extérieur est ajusté au diamètre intérieur du tube principal 16.

Le deuxième tronçon cylindrique 19 fait saillie axialement et radialement du tube principal 16. Ce tronçon 19 porte des moyens de fixation démontables du tube-enveloppe 11 sur le corps de machine 3, sous la forme d'une paire de bras élastiques 21, s'étendant axialement et de façon symétrique l'un vis-à-vis de l'autre, par rapport à un plan axial. Chaque bras 21 se découpe dans la paroi périphérique du deuxième tronçon 19, en étant attaché à cette dernière par son extrémité supérieure, laquelle définit une charnière de flexion du bras 21. L'extrémité inférieure du bras 21 est libre et supporte un bouton de manoeuvre 23 en saillie radiale. Dans une région intermédiaire, chaque bras 21 est pourvu d'un plot 25 en saillie radiale formant crochet de verrouillage.

L'embout 17 présente également une collerette tronconique 27 dans une région de transition entre les tronçons cylindriques 18, 19, dont la base 28 de plus grand diamètre s'étend de façon périphérique à la base du deuxième tronçon 19, en définissant un épaulement annulaire prévu pour limiter l'engagement axial du tube-enveloppe 11 dans le corps de machine 3.

La liaison rigide indémontable entre le tube principal 16 et l'embout 17 est sécurisée par un manchon 29 de forme générale cylindrique, s'étendant à partir de la collerette 27 autour du tube principal 16 sur une partie de sa longueur. Le manchon 29, de préférence réalisé en matière plastique, peut définir une poignée de préhension de l'outil 5. Il peut être formé, par exemple, par surmoulage de matière plastique sur le tube principal 16 et l'embout 17 préalablement assemblés.

En se référant à nouveau aux Figures 1 et 2, on va à présent décrire plus particulièrement la partie du corps de machine 3, dans laquelle est reçu l'outil 5.

Le corps 3 présente un alésage axial 31 débouchant du côté inférieur du corps de machine 3. Cet alésage 31 est de forme générale sensiblement cylindrique, adaptée pour recevoir à engagement axial le premier tronçon 19 de l'embout 17. Débouchant dans l'alésage 31, est prévue une gorge annulaire 33 qui définit un cran d'arrêt complémentaire des crochets 25. Le corps de machine 3 a également une face inférieure sur laquelle débouche l'alésage 31, cette face étant pourvue d'un rebord annulaire 35 formant butée pour l'épaulement 28 de l'outil.

L'arbre-moteur 41 de la machine fait saillie axialement à l'intérieur de l'alésage 31 depuis le fond de ce dernier. L'arbre-moteur 41 est muni à son extrémité libre d'une forme d'entraînement 43, liée en rotation, et qui peut être accouplée de façon débrayable avec une forme d'entraînement complémentaire 45 prévue en extrémité supérieure de l'arbre d'entraînement 13 de l'outil. L'accouplement débrayable des deux formes d'entraînement 43, 45 peut par exemple être réalisé par des nervures et gorges axiales complémentaires.

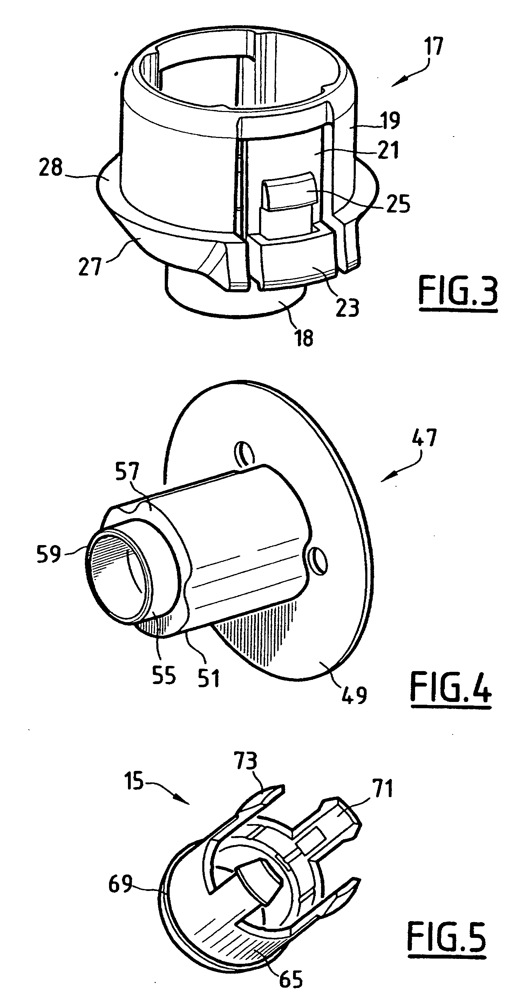

Le corps de machine 3 est solidaire d'un organe de blocage et de détection 47, représenté seul sur la Figure 4.

Cet organe de blocage et de détection 47 est constitué essentiellement d'un plateau 49 de fixation au corps 3, et d'une douille centrale 51 essentiellement cylindrique, d'axe orthogonal au plateau. Le plateau 49 est fixé rigidement au corps 3 en fond d'alésage 31 au moyen de vis 53. Le plateau 49 est de forme annulaire avec un alésage central au travers duquel s'étend l'arbre-moteur 41. La douille 51 fait saillie à l'intérieur de l'alésage 31 en entourant complètement la forme d'entraînement 43. A l'extrémité inférieure de la douille est formée une paroi cylindrique coaxiale 55 de plus faible diamètre, définissant à sa base un épaulement sensiblement annulaire 57, et à son extrémité libre un bord de butée 59.

Dans l'exemple représenté, le fond de l'alésage 31, autour de la douille 51, est recouvert d'un tapis élastomère 61 solidaire du corps 3.

On va à présent décrire plus en détail le palier 15 en référence aux Figures 1, 2 et 5.

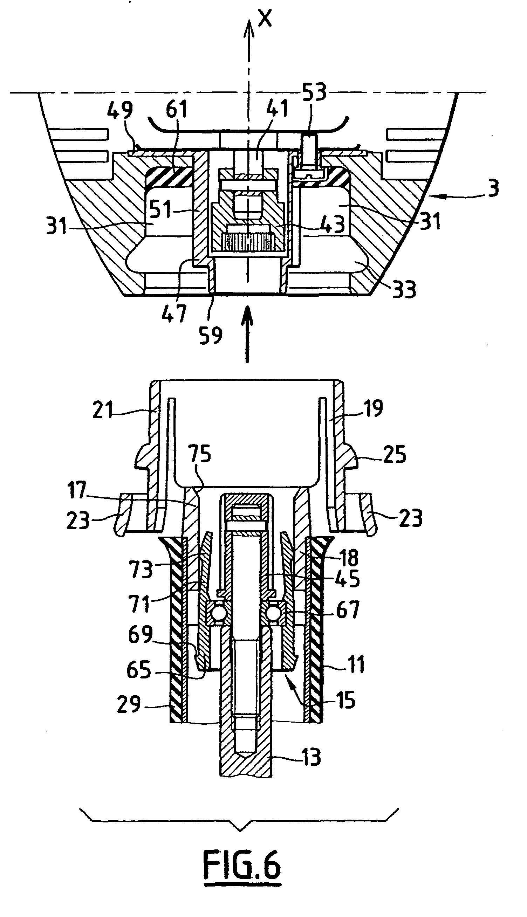

Le palier 15 comporte essentiellement une bague 65 sensiblement cylindrique en matière plastique, un roulement 67 (non représenté sur la Figure 5) par exemple à billes, ménagé à l'intérieur de la bague 65, et des moyens libérables de fixation du palier 15 à l'intérieur du tube-enveloppe 11.

La bague 65 est de dimensions extérieures ajustées à la dimension interne du premier tronçon cylindrique 18 de l'embout 17, de façon que le palier puisse être inséré axialement, sans jeu radial, à l'intérieur dudit tronçon 18.

Les moyens libérables de fixation du palier 15 comprennent, à l'extrémité inférieure de la bague 65, une collerette annulaire 69 définissant, avec le bord inférieur du tronçon 18, un arrêt axial dans une première direction, et des pattes flexibles 71 venues de matière avec la bague 65, en saillie axiale vers le haut à partir de cette dernière. Chaque patte flexible présente un crochet 73 à son extrémité libre, qui fait saillie radialement vers l'extérieur. Les crochets 73 définissent, avec une surface interne tronconique 75 évasée vers le haut du tronçon 18, un arrêt axial dans la deuxième direction du palier 15 par rapport au tube-enveloppe 11.

On comprend aisément le mode d'assemblage de l'arbre d'entraînement 13 à l'intérieur du tube enveloppe 11 par l'intermédiaire du palier 15 : le palier 15 étant solidaire de l'arbre d'entraînement 13, et l'embout 17 étant fixé rigidement sur le tube principal 16, on insère l'arbre d'entraînement 13 et son palier 15 à l'intérieur du tube-enveloppe 11, et on les fait coulisser vers le haut jusqu'à ce que les pattes flexibles 71 entrent en contact avec le bord inférieur du tronçon 18. En poursuivant le mouvement d'insertion, les pattes 71 fléchissent élastiquement vers l'axe X, et sont rappelées élastiquement vers leur position de repos lorsque les crochets 73 parviennent dans la section d'extrémité évasée du tronçon 18. La collerette 69 vient alors en butée sur le bord inférieur du tronçon 18, et le palier 15 est ainsi arrêté par rapport au tube-enveloppe 11, dans sa position axiale de fonctionnement normal.

Comme cela sera expliqué ultérieurement, le montage de l'arbre d'entraînement 13 et du palier 15 à l'intérieur du tube enveloppe 11 doit être effectué avant la fixation de l'outil 5 sur le corps de machine 3.

Une fois que l'outil a été ainsi assemblé, l'utilisateur peut monter l'outil 5 sur le corps de machine 3.

Pour cela, il insère axialement l'embout 17 à l'intérieur de l'alésage 31. A l'entrée de l'embout 17 dans l'alésage 31, les crochets 25 viennent au contact du rebord extérieur 35, ce qui provoque le fléchissement vers l'axe X des bras 21. Lorsque l'on poursuit l'insertion de l'embout 17 dans l'alésage 31, l'extrémité supérieure de l'embout 17 vient en appui sur le tapis élastomère 61 et le comprime légèrement, tandis que les crochets 25 tombent dans la gorge annulaire 33, ce qui provoque le retour élastique des bras 21 dans leur position de repos. Si l'on poursuit l'insertion, l'épaulement annulaire 28 de la collerette 27 vient en butée sur le rebord 35 du corps de machine 3. Sous l'effet de la réaction élastique du tapis élastomère 61 sur l'embout 17, les crochets 25 sont plaqués dans la gorge 33 dans leur position de butée. L'outil 5 est ainsi immobilisé axialement par rapport au corps 3.

Le tapis élastomère 61 assure plus généralement des fonctions de compensation de jeu axial, d'amortissement de vibrations, et d'isolation électrique notamment par rapport aux vis 53.

Il assure en outre une fonction d'étanchéité et a une forme prévue pour faciliter son nettoyage. Ainsi, il contribue à l'amélioration de l'hygiène de la machine.

Au terme de l'opération de montage de l'outil 5 dans le corps de machine 3 qui vient d'être décrite, on parvient à la configuration assemblée représentée sur les Figures 1 et 2.

Comme cela apparaît sur ces Figures, dans cette configuration, les formes d'entraînement 43, 45 respectives de l'arbre-moteur 41 et de l'arbre d'entraînement 13, sont accouplées sur une longueur l dite « longueur d'entraînement ».

On constate également que les pattes flexibles 71 du palier 15 sont engagées sur la paroi cylindrique d'extrémité 55 de l'organe de blocage 47 : la paroi interne d'une patte 71 recouvre, sur une longueur L dite « longueur d'interférence », la face externe de la paroi cylindrique 55, de préférence sans contact mais avec un espacement très faible. Dans l'exemple représenté, la face interne de chaque patte flexible 71, au moins au voisinage de l'extrémité libre, appartient à une surface fictive cylindrique coaxiale avec la bague 65, d'un diamètre sensiblement égal en étant supérieur, au diamètre extérieur de la paroi cylindrique 55 de l'organe de blocage 47. Il est convenu que le diamètre de la surface fictive s'entend du diamètre de cette surface fictive définie par les pattes 71 lorsqu'elles sont dans leur position de repos.

La paroi cylindrique 55 de l'organe de blocage 47 est rigide (d'une rigidité en flexion très supérieure à celle des pattes 71) et bloque, de ce fait, dans la position d'assemblage complet du palier 15 dans le tube-enveloppe 11 et de l'outil dans le corps 3, le débattement en flexion des pattes 71. L'organe 47 empêche ainsi le déverrouillage des moyens de fixation du palier sur le tube-enveloppe.

En fonctionnement de la machine, et dans cette position d'assemblage complet, l'arbre d'entraînement 13 ne risque donc pas d'être sujet à un démontage intempestif.

Dans le mode de réalisation qui vient d'être décrit :
- la longueur axiale de la paroi cylindrique 55 est supérieure à la longueur d'interférence L ;
- les pattes flexibles 71 et leurs crochets 73 sont prévus de telle sorte que leur débattement en flexion, durant l'insertion dans le tronçon 18, est d'une amplitude supérieure à l'espacement entre d'une part la surface fictive définie par la face interne des pattes 71, et d'autre part la surface extérieure de la paroi cylindrique 55 ;
- en position d'assemblage complet, l'extrémité supérieure du tronçon 18 et la surface extérieure de la paroi 55 ont une disposition relative qui bloque le passage entre elles, dans la direction axiale, de l'extrémité libre des pattes 71.

On comprend que pour démonter l'outil 5 du corps de machine 3, à partir de la position représentée sur les Figures 1 et 2 , il suffit à un utilisateur de presser sur les boutons 23 du manchon 17, de façon à extraire les crochets 25 de la gorge 33, et de dégager le tube-enveloppe 11 de l'alésage 31 par un retrait axial.

En référence à la Figure 6, on va décrire à présent une situation d'assemblage incomplet du palier 15, et solidairement de l'arbre d'entraînement 13, à l'intérieur du tube-enveloppe 11.

Dans une telle configuration, le palier 15 est par exemple introduit de façon incomplète à l'intérieur du tronçon 18 de l'embout 17, de sorte que les pattes flexibles 71 sont maintenues en position fléchie vers l'axe X. Lorsqu'un utilisateur tente de monter l'outil 5 sur le corps de machine 3, les extrémités libres des pattes 71 ne sont pas suffisamment écartées de l'axe d'insertion X pour glisser sur la surface externe de la paroi cylindrique d'extrémité 55 de l'organe de blocage 47. Ces extrémités libres viennent en butée sur le bord de butée 59 de l'organe de blocage 47. Il s'ensuit que l'utilisateur ne peut poursuivre normalement l'insertion de l'embout 17 dans l'alésage 31, et ne peut pas parvenir à la position de verrouillage des crochets 25 dans la gorge 33. S'il force pour parvenir à cette position de verrouillage de l'embout dans l'alésage, l'utilisateur provoque une extraction supplémentaire de l'arbre d'entraînement, qui est repoussé partiellement hors du tube-enveloppe 11. Cette extraction nette donne une indication visuelle à l'utilisateur de l'assemblage incorrect de l'arbre d'entraînement dans le tube-enveloppe.

Du fait que la longueur d'entraînement l est inférieure à la longueur d'interférence L, les formes d'entraînement 43, 45 ne sont à aucun moment en prise dans un tel cas de montage incomplet du palier 15 dans le tube-enveloppe 11.

Grâce à cette disposition, même si le moteur électrique est alimenté pour mettre en rotation l'arbre-moteur 41, le mouvement de rotation ne peut pas être transmis à l'arbre d'entraînement 13 si ce dernier n'est pas engagé de façon complète avec son palier 15 dans le tube-enveloppe 11. Cela procure une sécurité accrue pour l'utilisateur et évite une destruction des formes d'entraînement 43, 45.

On comprend également que l'organe de blocage 47 empêche le montage de l'arbre 13 et du palier 15 dans le tube-enveloppe 11 après le verrouillage du tube-enveloppe sur le corps 3. En effet, si le tube-enveloppe 11 est verrouillé sur le corps 3 en l'absence de l'arbre d'entraînement 13 et du palier 15, l'insertion du palier 15 solidairement avec l'arbre 13 à l'intérieur du tronçon 18 est arrêtée du fait que les pattes fléchies 71 viennent, par leur extrémité libre, en butée sur le bord de butée 59 de l'organe de blocage 47.

On comprend là encore que cette disposition sécurise la manipulation de l'arbre d'entraînement 13 et de son organe de coupe par l'utilisateur, dans le cas où ce dernier serait tenté de monter l'arbre dans le tube-enveloppe durant la rotation de l'arbre-moteur 41.

## Revendications

1. Outil de machine de traitement de produits alimentaires, comportant
- un tube-enveloppe (11),
- un arbre (13) d'entraînement en rotation d'un organe de traitement des produits, et
- un organe (15) de centrage et de guidage assurant le montage à rotation de l'arbre d'entraînement (13) dans le tube-enveloppe (11),
- le tube-enveloppe (11) et l'arbre d'entraînement (13) étant munis à une même première extrémité respectivement de moyens (21, 25) de verrouillage démontables sur un corps de machine (3) et de moyens (45) d'accouplement débrayables à un arbre-moteur (41) de la machine,
- l'organe de centrage et de guidage (15) comportant des moyens (71, 73) démontables de fixation au tube-enveloppe (11), de façon à permettre le démontage de l'arbre d'entraînement (13) par rapport au tube-enveloppe (11),
**caractérisé en ce que** ledit organe de centrage et de guidage (15) est monté dans le tube-enveloppe (11) du côté de la première extrémité, et ses moyens de fixation (71, 73) sont adaptés pour être bloqués en position correcte de fixation sur le tube-enveloppe par des moyens (47) complémentaires de blocage prévus sur le corps de machine (3), lors de la fixation du tube-enveloppe (11) sur le corps de machine (3), de façon à éviter le démontage intempestif de l'arbre d'entraînement (13) par rapport au tube-enveloppe (11) lors du fonctionnement de l'outil.

2. Outil selon la revendication 1, **caractérisé en ce que** les moyens de fixation (71, 73) dudit organe de centrage et de guidage (15) sont adaptés pour empêcher la fixation du tube-enveloppe (11) sur le corps de machine (3), dans le cas où lesdits moyens de fixation sont en position incorrecte de fixation sur le tube-enveloppe.

3. Outil selon la revendication 2, **caractérisé en ce que** les moyens de fixation (71, 73) dudit organe de centrage et de guidage (15) sont adaptés pour empêcher l'accouplement de l'arbre d'entraînement (13) et de l'arbre-moteur (41), dans le cas où lesdits moyens de fixation (71, 73) sont en position incorrecte de fixation sur le tube-enveloppe (11).

4. Outil selon l'une quelconque des revendications 1 à 3, **caractérisé en ce que** l'organe de centrage et de guidage (15) comprend une bague (65) et un palier de roulement (67), agencé dans ladite bague (65) et recevant l'arbre d'entraînement (13) à rotation, et **en ce que** le tube-enveloppe (11) est pourvu d'un épaulement radial (75) formant butée axiale, tandis que les moyens de fixation comprennent au moins une patte élastique (71) en saillie axiale de la bague (65), ladite patte élastique (71) présentant une extrémité libre tournée du côté de la première extrémité, ladite patte élastique étant munie d'un crochet (73) complémentaire de l'épaulement radial (75), et étant susceptible de débattement radial entre une position de repos, dans laquelle le crochet (73) peut coopérer avec l'épaulement (75) du tube-enveloppe pour définir la position correcte de fixation de l'organe de centrage et de guidage (15) dans le tube-enveloppe (11), et une position fléchie vers l'intérieur.

5. Outil selon l'une quelconque des revendications 1 à 4, **caractérisé en ce que** les moyens (21, 25) de verrouillage du tube-enveloppe (11) sur le corps de machine (3) comprennent, du côté de la première extrémité, au moins un bras élastique axial (21) flexible, muni d'un crochet (25) pouvant coopérer avec un épaulement (33) complémentaire du corps de machine, de façon à former une liaison par encliquetage.

6. Machine de traitement de produits alimentaires, **caractérisée en ce qu'**elle comprend un outil (5) conforme à l'une quelconque des revendications 1 à 5, un corps de machine (3) sur lequel est fixé l'outil (5) de façon démontable, et des moyens (47) complémentaires de blocage des moyens (71, 73) de fixation de l'arbre d'entraînement (13) dans le tube-enveloppe (11), lesdits moyens de blocage (47) étant prévus sur ledit corps de machine (3).

7. Machine selon la revendication 6, **caractérisée en ce que** lesdits moyens complémentaires de blocage (47) sont adaptés pour coopérer avec les moyens (71, 73) de fixation de l'organe de centrage et de guidage (15), pour empêcher la fixation du tube-enveloppe (11) sur le corps de machine (3) si lesdits moyens de fixation (71, 73) sont en position incorrecte de fixation sur le tube-enveloppe (11).

8. Machine selon la revendication 7, **caractérisée en ce que** lesdits moyens complémentaires de blocage (47) sont adaptés pour coopérer avec les moyens (71, 73) de fixation de l'organe de centrage et de guidage (15) pour empêcher l'accouplement de l'arbre d'entraînement (13) et de l'arbre-moteur (41), dans le cas où lesdits moyens de fixation (71, 73) sont en position incorrecte de fixation sur le tube-enveloppe (11).

9. Machine selon l'une quelconque des revendications 6 à 8, dans laquelle l'outil (5) est de plus conforme à la revendication 4, **caractérisée en ce que** les moyens de blocage (47) comprennent une paroi rigide (55) solidaire du corps de machine (3), s'étendant axialement du côté de l'extrémité d'accouplement de l'arbre-moteur (41) avec l'arbre d'entraînement (13) de l'outil, ladite paroi (55) étant adaptée pour bloquer le débattement de la patte élastique (71), en position d'assemblage complet correspondant à la position de fixation correcte de la bague (65) dans le tube-enveloppe (11) et à la position de verrouillage du tube-enveloppe (11) sur le corps de machine (3).

10. Machine selon la revendication 9, **caractérisée en ce que** ladite paroi rigide (55) a une surface externe qui vient sensiblement au contact de la surface interne de la patte élastique (71), dans la position d'assemblage complet.

11. Machine selon la revendication 9 ou 10, **caractérisée en ce que** la paroi rigide (55) est une paroi cylindrique coaxiale (X) à l'arbre-moteur (41), de diamètre extérieur sensiblement égal, en étant inférieur, à la distance de la surface interne de la patte élastique (71) à l'axe (X) de l'arbre d'entraînement (13).

12. Machine selon l'une quelconque des revendications 9 à 11, **caractérisée en ce que** l'arbre-moteur (41) est muni d'une forme d'entraînement (43) telle que l'extrémité d'arbre d'entraînement (13) de l'outil (5) et ladite forme d'entraînement (43) coopèrent, en position d'assemblage complet, sur une longueur axiale d'entraînement (l), et **en ce que**, en position d'assemblage complet, la paroi rigide (55) recouvre la patte élastique (71) sur une longueur axiale d'interférence (L), telle que la longueur d'interférence (L) est supérieure à la longueur d'entraînement (l).

## Patentansprüche

1. Werkzeug einer Maschine zur Behandlung eines Nahrungsmittels, umfassend
- ein Hüllrohr (11),
- eine drehbare Antriebswelle (13) eines Elementes zur Behandlung von Produkten, und
- ein Zentrierungs- und Führungselement (15), das die drehbare Anbringung der Antriebswelle (13) in dem Hüllrohr (11) sicherstellt,
- wobei das Hüllrohr (11) und die Antriebswelle (13) an einem gleichen ersten Ende mit auf einem Maschinenkörper (3) demontierbaren Verriegelungsmitteln (21, 25) beziehungsweise Kopplungsmitteln (45), die an eine Motorwelle (41) der Maschine koppelbar sind, ausgestattet sind,
- das Zentrierungs- und Führungselement (15) demontierbare Mittel (71, 73) zur Befestigung an dem Hüllrohr (11) aufweist, derart, dass sie das Demontieren der Antriebswelle (13) im Vergleich zum Hüllrohr (11) erlauben, **dadurch** charakterisiert, dass das genannte Zentrierungs- und
Führungselement (15) in dem Hüllrohr (11) auf der Seite des ersten Endes angebracht ist und seine Mittel zur Befestigung (71, 73) angepasst sind, um in einer korrekten Befestigungsposition auf dem Hüllrohr durch ergänzende Mittel (47) zur Feststellung, die auf dem Maschinenkörper (3) vorgesehen sind, festgestellt zu werden, zur Befestigung des Hüllrohrs (11) auf dem Maschinenkörper (3), derart, dass die unangebrachte Demontage der Antriebswelle (13) im Vergleich zum Hüllrohr (11) infolge des Betriebes des Werkzeugs vermieden wird.

2. Werkzeug gemäß Anspruch 1, **dadurch** charakterisiert, dass die Mittel zur Befestigung (71, 73) des genannten Zentrierungs- und Führungselements (15) angepasst sind, um die Befestigung des Hüllrohrs (11) auf dem Maschinenkörper (3) für den Fall zu verhindern, wo die genannten Mittel zur Befestigung in einer inkorrekten Befestigungsposition auf dem Hüllrohr sind.

3. Werkzeug gemäß Anspruch 2, **dadurch** charakterisiert, dass die Mittel zur Befestigung (71, 73) des genannten Zentrierungs- und Führungselements (15) angepasst sind, um die Koppelung der Antriebswelle (13) und der Motorwelle (41) für den Fall zu verhindern, wo die genannten Mittel zur Befestigung (71, 73) in einer inkorrekten Befestigungsposition auf dem Hüllrohr (11) sind.

4. Werkzeug gemäß eines beliebigen der Ansprüche 1 bis 3, **dadurch** charakterisiert, dass das Zentrierungs- und Führungselement (15) einen Ring (65) und ein Wälzlager (67) umfasst, das in dem genannten Ring (65) angeordnet ist und die drehbare Antriebswelle (13) aufnimmt, und dass das Hüllrohr (11) mit einem radialen Absatz (75) ausgestattet ist, der einen axialen Anschlag bildet, während die Mittel zur Befestigung mindestens eine elastische axial zum Ring (65) vorspringende Halterung (71) umfassen, wobei die genannte elastische Halterung (71) ein freies, zu der Seite des ersten Endes gewandtes Ende aufweist, wobei die genannte elastische Halterung mit einem Haken (73) ausgestattet ist, der komplementär zu dem radialen Absatz (75) ist, und zu einem radialen Federungsweg zwischen einer Ruheposition, in welcher der Haken (73) mit dem Absatz (75) des Hüllrohrs zusammenarbeiten kann, um eine korrekte Befestigungsposition des Zentrierungs- und Führungselementes (15) im Hüllrohr (11) zu bestimmen, und einer zum Inneren hin gebeugten Position imstande ist.

5. Werkzeug gemäß eines beliebigen der Ansprüche 1 bis 4, **dadurch** charakterisiert, dass die Verriegelungsmittel (21, 25) des Hüllrohrs (11) auf dem Maschinenkörper (3) auf der Seite des ersten Endes mindestens einen elastischen axialen biegsamen Arm (21) umfassen, der mit einem Haken (25) ausgestattet ist, der mit einem ergänzenden Absatz (33) des Maschinenkörpers derart zusammenarbeiten kann, dass sie eine Schnappverbindung bilden.

6. Maschine zur Behandlung eines Nahrungsmittels, **dadurch** charakterisiert, dass sie ein Werkzeug (5) gemäß einem beliebigen der Ansprüche 1 bis 5, einen Maschinenkörper (3), auf welchem das Werkzeug (5) in demontierbarer Weise befestigt ist, und ergänzende Mittel (47) zur Feststellung der Mittel (71, 73) zur Befestigung der Antriebswelle (13) im Hüllrohr (11) umfasst, wobei die genannten Mittel zur Feststellung (47) auf dem Maschinenkörper (3) vorgesehen sind.

7. Maschine gemäß Anspruch 6, **dadurch** charakterisiert, dass die genannten ergänzenden Mittel zur Feststellung (47) angepasst sind, um mit den Mitteln (71, 73) zur Befestigung des Zentrierungs- und Führungselements (15) zusammenzuarbeiten, um die Befestigung des Hüllrohrs (11) auf dem Maschinenkörper (3) zu verhindern, wenn die genannten Mittel zur Befestigung (71, 73) in einer inkorrekten Befestigungsposition auf dem Hüllrohr (11) sind.

8. Maschine gemäß Anspruch 7, **dadurch** charakterisiert, dass die genannten ergänzenden Mittel zur Feststellung (47) angepasst sind, um mit den Mitteln (71, 73) zur Befestigung des Zentrierungs- und Führungselements (15) zusammenzuarbeiten, um die Kopplung der Antriebswelle (13) und der Motorwelle (41) für den Fall zu verhindern, wo die genannten Mittel zur Befestigung (71, 73) in einer inkorrekten Befestigungsposition auf dem Hüllrohr (11) sind.

9. Maschine gemäß eines beliebigen der Ansprüche 6 bis 8, in welcher zudem das Werkzeug (5) gemäß dem Anspruch 4 ist, **dadurch** charakterisiert, dass die Mittel zur Feststellung (47) eine starre Wand (55) umfassen, die mit dem Maschinenkörper (3) verbunden ist und sich axial auf der Seite des Endes der Kopplung der Motorwelle (41) mit der Antriebswelle (13) des Werkzeugs erstreckt, wobei die genannte Wand (55) angepasst ist, um den Federungsweg der elastischen Halterung (71) in einer Position der vollständigen Verbindung festzustellen, die der korrekten Befestigungsposition des Rings (65) im Hüllrohr (11) und der Verriegelungsposition des Hüllrohrs (11) auf dem Maschinenkörper (3) entspricht.

10. Maschine gemäß Anspruch 9, **dadurch** charakterisiert, dass die genannte starre Wand (55) eine äußere Oberfläche hat, die in der Position der vollständigen Verbindung ungefähr in Kontakt mit der inneren Oberfläche der elastischen Halterung (71) kommt.

11. Maschine gemäß Anspruch 9 oder 10, **dadurch** charakterisiert, dass die starre Wand (55) eine zylindrische Wand ist, die koaxial (X) zur Motorwelle (41) ist, mit einem äußeren Durchmesser, der niedriger seiend ungefähr gleich einem Abstand der inneren Oberfläche der elastischen Halterung (71) zu der Achse (X) der Antriebswelle (13) ist.

12. Maschine gemäß eines beliebigen der Ansprüche 9 bis 11, **dadurch** charakterisiert, dass die Motorwelle (41) mit einer Antriebsform (43) derart ausgestattet ist, dass das Ende der Antriebswelle (13) des Werkzeugs (5) und die genannte Antriebsform (43) in der Position der vollständigen Verbindung auf einer axialen Antriebslänge (l) zusammenarbeiten, und dass in der Position der vollständigen Verbindung die starre Wand (55) die elastische Halterung (71) auf einer axialen Überlagerungslänge (L) derart überdeckt, dass die Überlagerungslänge (L) höher als die Antriebslänge (l) ist.

## Claims

1. Tool for a machine for processing food products, comprising
- a tubular casing (11),
- a shaft (13) for driving in rotation a member for processing the products, and
- a centring and guiding member (15) which ensures that the drive shaft (13) is mounted for rotation in the tubular casing (11),
- the tubular casing (11) and the drive shaft (13) being equipped at the same first end with, respectively, removable means (21, 25) for latching to a machine body (3) and releasable means (45) for coupling to a primary shaft (41) of the machine,
- the centring and guiding member (15) comprising removable means (71, 73) for fixing to the tubular casing (11) in order to allow the drive shaft (13) to be removed from the tubular casing (11),
**characterised in that** said centring and guiding member (15) is mounted in the tubular casing (11) at the first end, and its fixing means (71, 73) are suitable for being locked in the correct position for fixing to the tubular casing by complemenrary locking means (47) provided on the machine body (3), when the tubular casing (11) is fixed to the machine body (3), in order to prevent the drive shaft (13) from being inadvertently removed from the tubular casing (11) during operation of the tool.

2. Tool according to claim 1, **characterised in that** the fixing means (71, 73) of said centring and guiding member (15) are suitable for preventing the tubular casing (11) from being fixed to the machine body (3) when said fixing means are in an incorrect position for fixing to the tubular casing.

3. Tool according to claim 2, **characterised in that** the fixing means (71, 73) of said centring and guiding member (15) are suitable for preventing the drive shaft (13) and the primary shaft (41) from being coupled when said fixing means (71, 73) are in an incorrect position for fixing to the tubular casing (11).

4. Tool according to any one of claims 1 to 3, **characterised in that** the centring and guiding member (15) comprises a ring (65) and a roller bearing (67), provided in said ring (65) and receiving the drive shaft (13) for rotation, and **in that** the tubular casing (11) is provided with a radial shoulder (75) forming an axial stop, while the fixing means comprise at least one resilient lug (71) projecting axially from the ring (65), said resilient lug (71) having a free end facing in the direction of the first end, said resilient lug being provided with a complementary hook (73) for the radial shoulder (75) and being capable of radial deflection between a rest position, in which the hook (73) is able to cooperate with the shoulder (75) of the tubular casing in order to define the correct fixing position of the centring and guiding member (15) in the tubular casing (11), and an inwardly bent position.

5. Tool according to any one of claims 1 to 4, **characterised in that** the means (21, 25) for latching the tubular casing (11) to the machine body (3) compribe, at the first end, at least one flexible axial resilient arm (21) equipped with a hook (25) which is able to cooperate with a complementary shoulder (33) of the machine body in order to form a snap-fit connection.

6. Machine for processing food products, **characterised in that** it comprises a tool (5) according to any one of claims 1 to 5, a machine body (3) to which the tool (5) is removably fixed, and complementary means (47) for locking the means (71, 73) for fixing the drive shaft (13) in the tubular casing (11), said locking means (47) being provided on said machine body (3).

7. Machine according to claim 6, **characterised in that** said complementary locking means (47) are suitable for cooperating with the means (71, 73) for fixing the centring and guiding member (15) in order to prevent the tubular casing (11) from being fixed to the machine body (3) if said fixing means (71, 73) are in an incorrect position for fixing to the tubular casing (11).

8. Machine according to claim 7, **characterised in that** said complementary locking means (47) are suitable for cooperating with the means (71, 73) for fixing the centring and guiding member (15) in order to prevent the drive shaft (13) and the primary shaft (41) from being coupled if said fixing means (72, 73) are in an incorrect position for fixing to the tubular casing (11).

9. Machine according to any one of claims 6 to 8, in which the tool (5) is further in accordance with claim 4, **characterised in that** the locking means (47) comprise a rigid wall (55) which is integral with the machine body (3) and extends axially in the direction towards the end at which the primary shaft (41) is coupled with the drive shaft (13) of the tool, said wall (55) being suitable for blocking the deflection of the resilient lug (71), in the fully assembled position carresponding to the correct position for fixing the ring (65) in the tubular casing (11) and to the latching position of the tubular casing (11) on the machine body (3).

10. Machine according to claim 9, **characterised in that** said rigid wall (55) has an outer surface which comes substantially into contact with the inner surface of the resilient lug (71), in the fully assembled position.

11. Machine according to claim 9 or 10, **characterised in that** the rigid wall (55) is a cylindrical wall coaxial (X) with the primary shaft (41), having an outside diameter that is substantially equal to, while being less than, the distance of the inner surface of the resilient lug (71) from the axis (X) of the drive shaft (13).

12. Machine according to any ane of claims 9 to 11, **characterised in that** the primary shaft (41) is provided with a driving form (43) such that the end of the drive shaft (13) of the tool (5) and said driving form (43) cooperate, in the fully assembled position, over an axial drive length (l), and **in that**, in the fully assembled position, the rigid wall (55) covers the resilient lug (71) over an axial interference length (L) such that the interference length (L) is greater than the drive length (l).
